(19) Europäisches Patentamt
European Patent Office
Office européen des brevets

(11) EP 2 672 542 B1

## (12) EUROPEAN PATENT SPECIFICATION

(45) Date of publication and mention
of the grant of the patent:
**07.06.2017 Bulletin 2017/23**

(51) Int Cl.:
*H01M 2/02* *(2006.01)*          *H01M 2/10* *(2006.01)*
*H01M 10/04* *(2006.01)*          *H01M 2/14* *(2006.01)*

(21) Application number: **13163664.9**

(22) Date of filing: **15.04.2013**

(54) **Battery cell**

Batteriezelle

Cellule de batterie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.06.2012 US 201261657498 P
15.03.2013 US 201313831645**

(43) Date of publication of application:
**11.12.2013 Bulletin 2013/50**

(73) Proprietor: **Samsung SDI Co., Ltd.
Yongin-si, Gyeonggi-do (KR)**

(72) Inventor: **Yun, Ji-Won
Yongin-si (KR)**

(74) Representative: **Gulde & Partner
Patent- und Rechtsanwaltskanzlei mbB
Wallstraße 58/59
10179 Berlin (DE)**

(56) References cited:
**EP-A1- 1 445 806          EP-A1- 1 447 864
EP-A1- 2 273 599          EP-A2- 1 022 798
KR-A- 20000 051 639          KR-A- 20080 035 226**

## Description

The present invention relates to a battery cell.

## Description of the Related Art

Recently, a battery cell has been variously used as a power source of portable electronic devices. In addition, the portable electronic devices have been used in various fields and as a consequence, the demand for the battery cell has rapidly increased. Since the battery cell is able to be reused many times by charging and discharging, it is effective in economic and environmental terms. Therefore, the use of the battery cell has been encouraged.

Further, in accordance with the demand for miniaturization and lightness of the electronic device, miniaturization and lightness of the battery cell have been demanded. However, since the battery cell contains a material having high reactivity, such as lithium, therein, there was a limitation in making the battery cell small and light due to stability. Therefore, studies on a technology for developing a battery cell that may be miniaturized and become light simultaneously with having improved stability have been conducted.

Battery cells are disclosed in EP 1 445 806 A1, KR 2000 0051639 A, EP 1 022 798 A2, EP 2 273 599 A1, KR 2008 0035226 A and EP 1 447 864 A1.

## SUMMARY OF INVENTION

An object of the present invention is to provide a battery cell that may be miniaturized and become light simultaneously with having improved stability.

The present invention concerns to a battery cell as defined in claim 1.

Further embodiments of the invention could be learned from the dependent claims and the following description.

## BRIEF DESCRIPTION OF THE DRAWINGS

The accompanying drawings, together with the specification, illustrate exemplary embodiments of the present device, and, together with the description, serve to explain the principles of the present device.

FIG. 1 is an exploded perspective view showing a battery cell according to an exemplary embodiment of the present invention;

FIG. 2 is a perspective view showing an electrode assembly of the battery cell shown in FIG. 1 and a taping portion enclosing the electrode assembly;

FIG. 3 is a cross-sectional view showing the battery cell shown in FIG. 1;

FIG. 4 is a cross-sectional view showing the taping portion of the battery cell shown in FIG. 1;

FIG. 5 is a cross-sectional view showing a battery cell according to another exemplary embodiment of the present invention;

FIG. 6 is a cross-sectional view showing a taping portion of the battery cell shown in FIG. 5;

FIG. 7 is an cross-sectional view showing a battery cell according to yet another exemplary embodiment of the present invention; and

FIG. 8 is a cross-sectional view showing a taping portion of the battery cell shown in FIG. 7.

## DETAILED DESCRIPTION OF THE DEVICE

Various objects, advantages and features of the invention will become apparent from the following description of embodiments with reference to the accompanying drawings.

Hereinafter, exemplary embodiments of the present invention will be described in detail with reference to the accompanying drawings.

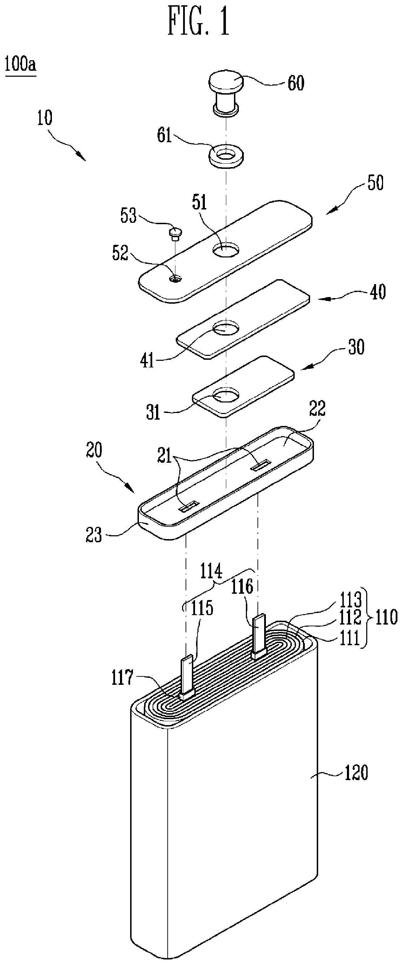

FIG. 1 is an exploded perspective view showing a battery cell 100a according to an exemplary embodiment of the present invention.

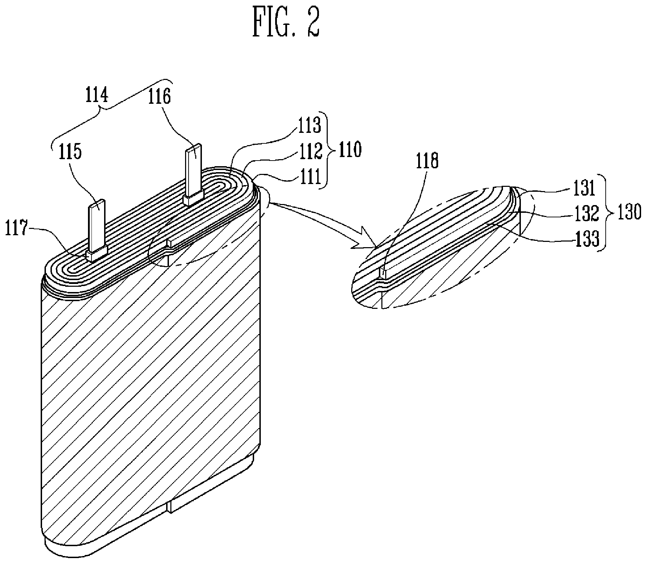

As shown in FIG. 1, the battery cell is configured to include an electrode assembly 110, a taping portion 130 enclosing an outer peripheral surface of the electrode assembly (shown in FIG. 2), a case 120 receiving the electrode assembly 110, and a cap assembly 10 closing one open surface of the case 120, wherein the taping portion 130 may include a first adhesive layer 133, a first base layer 132, and a second base layer 131 (shown in FIG. 2).

The case 120 is a member receiving the electrode assembly 110.

The case 120 receives the electrode assembly 110 in one open surface, thereby making it possible to protect the electrode assembly 110 from external impact. In addition, the case 120 may be made of a metal material using a deep drawing scheme. Meanwhile, the horizontal cross-section of the case may be implemented as a rectangular shape with round-shaped edges. However, the horizontal cross-section of the case 120 is not limited thereto, but may be implemented in a rectangular shape or an oval shape.

In the exemplary embodiment of the present invention, the case 120 may be implemented as a square shaped can, or a circular shaped can.

The cap assembly 10, which is a member closing one open surface of the case 120, may include a cap plate 50, an electrode terminal 60, an insulation plate 40, a terminal plate 30, and a gasket 61. The cap assembly 10 may be coupled to the case 120 of the battery cell 100a in a forced-fitting scheme and made of an aluminum or aluminum alloy.

At the time of coupling the cap assembly 10 with the case 120, the cap plate 50 may close one open surface of the case 120 to form one surface of the case 120. Therefore, the cap plate 50 may be coupled to the closed surface using a method such as welding. In addition, the cap plate 50 may be electrically connected to any one of electrode taps 114 led through lead through holes 21 of the insulation case 20. Meanwhile, the cap plate 50 may be formed with a first terminal hole 51 for coupling the gasket 61 with the electrode terminal 60 and an electrolyte injection hole 52 used as a passage for injecting electrolyte solution. Here, after injecting the electrolyte solution through the electrolyte injection hole 52, it may be closed with a cap 53.

The gasket 61 is for secure insulation between the electrode terminal and the cap plate 50, and may be positioned therebetween. Here, the gasket 61 may have a hole at a position corresponding to the first terminal hole 51 of the cap plate 50, such that the electrode terminal 60 may be coupled to the gasket 61 and the cap plate 50 through the hole and the first terminal hole 51.

The insulation plate 40 is interposed between the cap plate 50 and the terminal plate 30 for insulation therebetween. Here, the insulation plate 40 may have a second terminal hole 41 at a position corresponding to the first terminal hole 51, and the electrode terminal 60 passing through the first terminal hole 51 and a hole of the gasket 61 may also penetrate through the second hole 41.

The electrode terminal 60 may penetrate to a third terminal hole 31 formed on the terminal plate 30, such that the electrode terminal 60 may be electrically connected to the electrode terminal 60. In addition, the terminal plate 30 may be electrically connected to an electrode tap 114 not connected to the cap plate 50 of the electrode taps 114. That is, in the case in which the cap plate 50 is electrically connected to a cathode tap 115 of the electrode taps 114, the electrode plate 30 is connected to an anode tap 116, thereby making it possible to relay electrical connection between the electrode terminal 60 and the cathode tap 116.

Meanwhile, the battery cell 100a according to the exemplary embodiment of the present invention further includes the insulation case 20 interposed between the electrode assembly 110 and the cap assembly 10.

The insulation case 20 may be positioned between the electrode assembly 110 and the terminal plate 30 in order to prevent the electrode assembly 110, the cap plate 50, the terminal plate, or the like, from being electrically short-circuited. At this time, the insulation case 20 may be positioned in the state in which it is inserted in an upper portion of the case 120, and may be generally made of hard plastic resin having excellent electrical insulating properties. Therefore, in the case of inserting the insulation case 20 into the case 120, there is little deformation due to electrolyte solution and insulation between the electrode assembly 110 and the cap assembly 10 may be easily secured.

In the case of using the hard plastic resin as the insulation case 20, since it is difficult to couple the insulation case 20 to the case 120 due to weak elasticity, in order to complement this problem the insulation case 20 is configured of a base portion 22 and a support portion 23 to thereby be stably coupled to the case 120. Here, the base portion 22 is a lower surface of the insulation case 20, and the support portion 23 is an outer side surface of the insulation case 20. Here, the base portion 22 of the insulation case 20 is formed as a plate having a predetermined thickness and is formed similar to the horizontal cross-sectional shape of the case 120, especially the cross-sectional shape of remaining space after receiving the electrode assembly 110. In addition, the base portion 22 of the insulation case 20 preferably has an area a little larger than that the cross-section of the remaining space in order to be forced-fitted to the case 120. The base portion 22 of the insulation case 20 described above is formed with the electrolyte injection hole and lead through holes.

The electrode assembly 110 is a member which has electrode taps at one side and produces electrochemical energy through migration of electrons or ions.

The electrode assembly 110 may be formed of a cathode plate 113, an anode plate 111 and a separator 112 that are wound in the state in which the cathode plate 113 and the anode plate 111 include the separator 112 therebetween. At this time, the cathode plate 113 and the anode plate 111 may be made by coating and drying slurry on an aluminum metal foil and a copper metal foil, respectively. In addition, the slurry may contain an active material of each of the anode plate 111 and a fixing material attaching the active material to the metal foil. In the case of the lithium secondary battery, lithium-containing oxide is usually used as the cathode plate active material and one of hard carbon, soft carbon, graphite, and a carbon material is usually used as the anode plate active material. However, the present invention is not limited to the lithium secondary battery.

The cathode tap 115 is coupled to the cathode plate 113 to protrude upwardly of the electrode assembly 110, the anode tap 116 is coupled to the anode plate 111 to protrude upwardly of the electrode assembly 110. In addition, in electrode assembly 110, the cathode tap 115 and the anode tap 116 are spaced apart from each other at a predetermined distance, such that they may be electrically separated from each other. Further, the cathode tap 115 and the anode tap 116 may be electrically connected to the cathode plate 113 and the anode plate 111 of the electrode assembly 110, respectively, and be led in an open direction of the case 120. To this end, the cathode tap 115 and the anode tap 116 may penetrate through each lead through hole 21 of the insulation case 20 fixed at the upper portion of the electrode assembly in the case 120, such that they may be connected to the case 120, the cap plate 50, or the terminal plate 30.

The portions of the cathode tap 115 and the anode tap 116 led from the electrode assembly 110 may be wound by a lamination tape 117. Here, the lamination tape 117 may block heat generated at the anode tap 116 and prevent the electrode assembly 110 from being pressed by an edge of the cathode tap 115 or the anode tap 116.

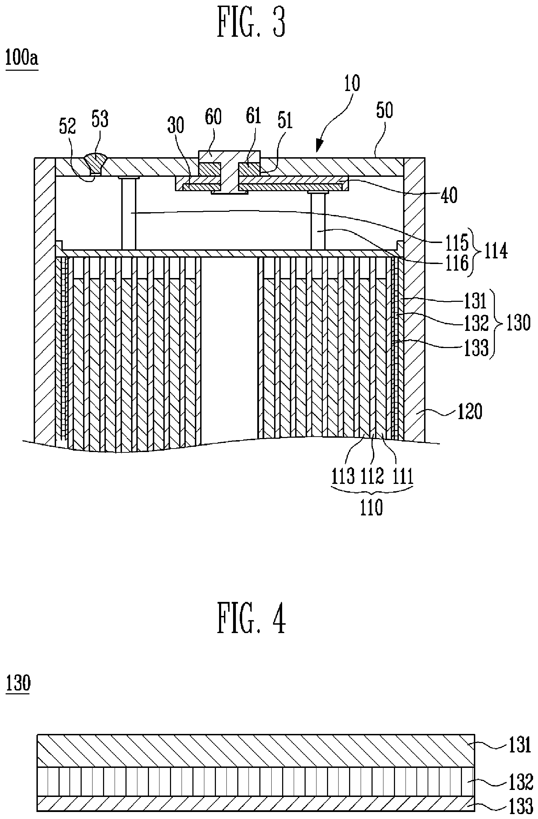

FIG. 2 is a perspective view showing the electrode assembly 110 of the battery cell 100a shown in FIG. 1 and the taping portion 130 enclosing the electrode assembly 110, FIG. 3 is a cross-sectional view showing the battery cell 100a shown in FIG. 1, and FIG. 4 is a cross-sectional view showing the taping portion 130 of the battery cell 100a shown in FIG. 1.

As shown in FIG. 2, the taping portion 130 encloses the outer peripheral surface of the electrode assembly 110, and particularly encloses a winding end line in which the windings of the electrode assembly 110 are ended. Therefore, a problem that, when the electrode assembly 110 in which the cathode plate 113, the separator 112, and the anode plate 111 are wound is inserted into the case 120, the windings come loose or it is difficult to receive the electrode assembly 110 in the case 120 due to friction with an inner surface of the case 120 may be prevented. In addition, the taping portion 130, together with the case 120, may protect the electrode assembly 110 from the external impact.

When the battery cell is used, the case in which the battery cell is impacted by a dent member of which a dismal end is sharp and pointed may occur. The dent member may penetrate through the case and the taping portion of the battery cell to arrive in the electrode assembly. Here, when the dent member arrives in the electrode assembly, short-circuit between the dent member and the cathode plate or the anode plate may occur, such that the battery cell may not perform its function properly. However, since in the battery cell 100a according to the exemplary embodiment the taping portion 130 is implemented as a material having high elongation and tensile strength, the dent member may not pass through the taping portion 130 when it would penetrate through the battery cell 100a, thereby making it possible to prevent the battery cell 100a and the dent member from being short-circuited to each other. Elongation means a value to multiply a stretch ratio or extension ratio by 100%. The stretch ratio or extension ratio is a measure of the extensional or normal strain of a differential line element, which can be defined at either the undeformed configuration or the deformed configuration. It is defined as the ratio between the final length ℓ and the initial length L of the material line.

$$\lambda = \frac{\ell}{L}$$

The extension ratio is approximately related to the engineering strain by

$$e = \frac{\ell - L}{L} = \lambda - 1$$

This equation implies that the normal strain is zero, so that there is no deformation when the stretch is equal to unity.

In order to implement the taping portion 130 described above, the taping portion 130 may include the first base layer 132 and the second base layer 131.

The first adhesive layer 133 is a member which is positioned on the outer peripheral surface of the electrode assembly 110 to attach the first base layer 132 to the outer peripheral surface of the electrode surface 110. Therefore, the phenomenon in which the windings in the electrode assembly 110 come loose may be prevented due to the first adhesive layer 133.

The first base layer 132 is a member which is positioned at the outer peripheral surface of the first adhesive layer 133 attached to the outer peripheral surface of the electrode assembly 110.

The first base layer 132 is made of a material having elongation higher than that of a material which the second base layer 131 is made of. Therefore, even in the case in which the dent member having a sharp and pointed dismal end is to penetrate through the battery cell 100a from outside, due to its high elongation the first base layer 132 may be only elongated and it would be difficult that the first base layer 132 is penetrated by the dent member. As the material of the first base layer 132 described above, polyimide (PI), polyparaphenylene sulfide (PPS), polypropylene (PP) (which are listed sequentially from high to low elongation), or the like, may be used. Generally considering a cost, or the like, polypropylene (PP) may be used. Preferably, the elongation of the first and second base layer is higher than 139.5%

The second base layer 131 is a member which is positioned on the outer peripheral surface of the first base layer 132 attached to the first adhesive layer 133.

The second base layer 131 is made of a material different from that of a material which the second base layer 132 is made of. Particularly, the second base layer 131 is made of a material having a tensile strength higher than that of a material which the first base layer 132 is made of. Therefore, even in the case in which the dent member is to penetrate through the battery cell 100a from outside, due to high tensile strength of the second base layer 131 it may be difficult that the second base layer 131 is penetrated by the dent member. When the tensile strength increases, even though the dent member impacts the second base layer 131 to thereby apply tension to the second base layer 131, the second base layer 131 withstands the tension. Therefore, it is difficult that the second base layer 131 is penetrated by the dent member. As the material of the second base layer 131 described above, polyethylene terephthalate (PET), polyimide (PI), polyparaphenylene sulfide (PPS) (which are listed sequentially from high to low elongation), or the like, may be used. Generally considering a cost, or the like, polyethylene terephthalate (PET) may be used. Preferably, the tensile strength of the first and second base layer is higher than 21246.4 N per square centimeter.

The second base layer 131 may be stacked with the first base layer 132 by heat-junction.

Meanwhile, since the first base layer 132 has high elongation and the second base layer 131 have high tensile strength, in the case in which the first base layer 132 and the second base layer 131 are stacked with each other to form a taping portion 132 it may be more difficult that an external dent member penetrates the taping portion 130. This is because high elongation and tensile strength of the taping portion 130 increases strength required for penetration of the dent member, that is, impact strength.

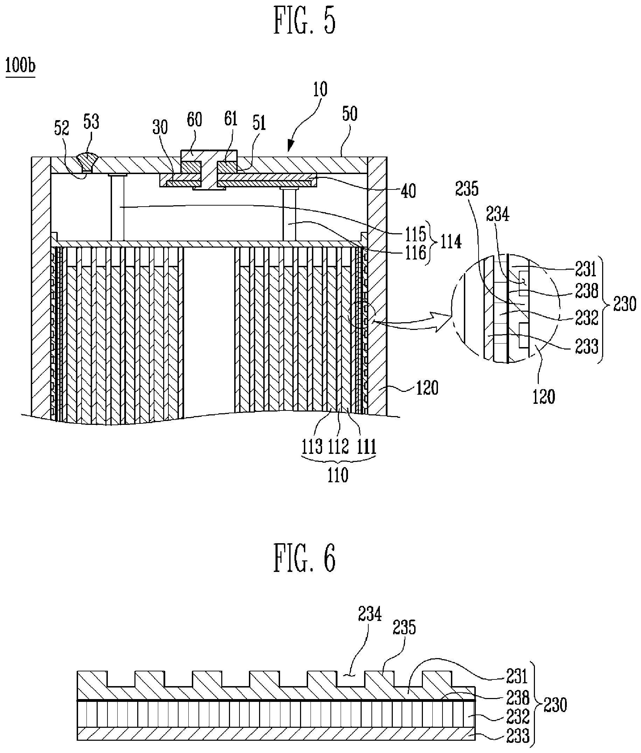

FIG. 5 is a cross-sectional view showing a battery cell 100b according to another exemplary embodiment of the present invention, and FIG. 6 is a cross-sectional view showing a taping portion of the battery cell shown in FIG. 5.

As shown in FIG. 5, the battery cell 100b is configured to include an electrode assembly 110, a taping portion 230 enclosing an outer peripheral surface of the electrode assembly 110, a case 120 receiving the electrode assembly 110, and a cap assembly 10 closing one open surface of the case 120, wherein the taping portion 230 has a first adhesive layer 233, a first base layer 232, a second adhesive layer 238 and a second base layer 231 sequentially stacked, and the second base layer 231 is formed with a plurality of first groove portions 234 and first protrusion portions 235.

As shown in FIG. 5 and 6, the taping portion 230 further includes a second adhesive layer 238 between the first base layer 232 and the second base layer 231, thereby making it possible to attach the first base layer 232 to the second base layer 231. Alternately, it is also possible to omit the second adhesive layer 238 and heat- join the first base layer 232 to the second base layer 231.

The second base layer 231 may have a plurality of grooves to form the first groove portions 234 that are in a relatively lower position and the first protrusion portions 235 that are in a relatively higher position. That is, the outer surface of the second base layer 231 may have the first groove portion 234 and the first protrusion portions 235 formed alternately. Here, as shown in FIG. 5, the first protrusion portions contact an inner peripheral surface of the case 120 and the groove portions 234 may not contact the case 120. Therefore, at the time of inserting the electrode assembly 110, friction power is reduced, thereby making it possible to easily insert the electrode assembly 110. Particularly, in the case in which friction power is high at the time of inserting the electrode assembly 110, the friction between the outer surface of the electrode assembly 110 or the taping portion 230 and the case 120 makes insertion of the electrode assembly 100 difficult and an U-shape phenomenon in which the central portion of the electrode assembly 110 is sagged may occur. However, in the taping portion 230 according to the another exemplary embodiment of the present invention only the first protrusion portions 235 generate friction with the inner peripheral surface of the case 120, thereby making it possible to reduce friction resistance. Therefore, the U-shape phenomenon described above may be prevented. In addition, at the time of inserting the electrode assembly 110 an air-flow is secured through the first groove portions 234, thereby making it possible to easily insert the electrode assembly 110.

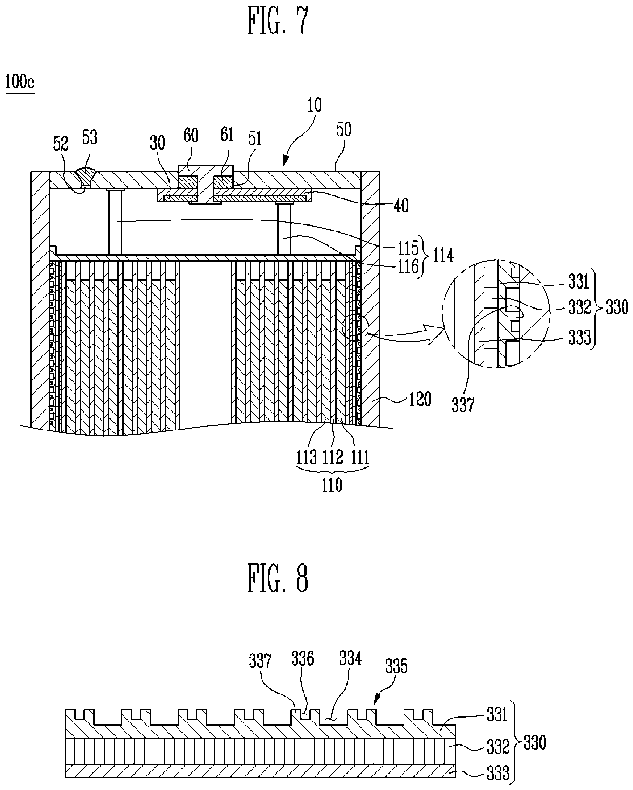

FIG. 7 is a cross-sectional view showing a battery cell 100c according to still another exemplary embodiment of the present invention, and FIG. 8 is a cross-sectional view showing a taping portion 330 of the battery cell 100c shown in FIG. 7.

As shown in FIG. 7, the taping portion 330 of the battery cell 100c has a first adhesive layer 333, a first base layer 332 and a second base layer 331 sequentially stacked, the second base layer 331 is formed with a plurality of first groove portions 334 and first protrusion portions 335, and the first protrusion portion 335 is formed with a second groove portion 336 and a second protrusion portion 337.

The first protrusion portion 335 of the second base layer 331 of the taping portion 330 is further formed with the second groove portion 336 and the second protrusion portion 337.

It means that the second base layer 331 has grooves formed twice. Therefore, as shown in FIG. 7, a region of the second base layer 331 which contacts the inner surface of the case 120 may be limited to the second protrusion portion 337 such that the area which contacts the inner surface of the case is reduced, thereby making it possible to reduce the friction force with the case 120 at the time of inserting the electrode assembly 110. Accordingly, the U-shape phenomenon that the central portion of the electrode assembly 110 may be further prevented.

As set forth above, according to the exemplary embodiments of the present invention, a battery cell capable of implementing miniaturization and lightness and simultaneously improving stability by enclosing an electrode assembly received in a case by a taping portion is provided.

In addition, according to the exemplary embodiments of the present invention, when the taping portion includes a base portion having a high elongation and a base portion having a high tensile strength, the impact strength is improved, thereby making it possible to much improve stability of the battery cell.

In addition, according to the exemplary embodiment of the present invention, since a battery cell capable of reducing friction force by including groove portions and protrusion portions in a second base portion is provided, therefore making it possible to prevent a U-shape phenomenon in which the central portion of the electrode assembly is sagged.

**Claims**

1. A battery cell (100a) comprising:

   an electrode assembly (110);
   a case (120) for receiving the electrode assembly (110); and
   a taping portion (130, 230, 330) enclosing an outer peripheral surface of the electrode assembly (110), wherein the taping portion (130, 230, 330) includes a first adhesive layer (133, 233, 333) positioned on the electrode assembly (110), a first base layer (132, 232, 332) positioned on the first adhesive layer (133, 233, 333), and a second base layer (131, 231, 331) positioned on the first base layer (132, 232, 332), **characterized in that** the first base layer (132, 232, 332) has an elongation higher than that of the second base layer (131, 231, 331), and the second base layer (131, 231, 331) has a tensile strength higher than that of the first base layer (132, 232, 332).

2. The battery cell of claim 1, wherein the elongation is higher than 139.5%.

3. The battery cell of claim 1 or 2, wherein the tensile strength is higher than 21246.4 N per square centimeter.

4. The battery cell of one of claims 1 through 3, wherein the first base layer (132, 232, 332) is made of one of polypropylene (PP), polyimide (PI) or polyparaphenylene sulfide (PPS).

5. The battery cell of one of claims 1 through 4, wherein the second base layer (131, 231, 331) is made of one of polyethylene terephthalate (PET), polyimide (PI) or polyparaphenylene sulfide (PPS).

6. The battery cell of one of the preceding claims, wherein the electrode assembly (110) has a cathode plate (113), a separator (112), and a anode plate (111) sequentially wound, and the taping portion (130) encloses a winding ending line in which the windings are ended.

7. The battery cell of one of the preceding claims, wherein the second base layer (231, 331) has groove portions (234, 334, 336) and protrusion portions (235, 335, 337) formed on the outer peripheral surface of the second base layer (231, 331).

8. The battery cell of claim 7, wherein the second base layer (331) has first groove portions (334) and first protrusion portions (335) and the first protrusion portions (335) are formed with second groove portions (336) and second protrusion portions (337) on the outer peripheral surface of the second base layer (331).

9. The battery cell of one of the preceding claims, wherein the case (120) has a rectangular or oval shape.

10. The battery cell of one of the preceding claims, wherein the taping portion (330) includes a second adhesive layer (231) formed between the first base layer (332) and the second base layer (331).

11. The battery cell of claims 7 and 8, wherein the protrusion portions (235, 337) are directly contacting an inner surface of the case (120).

**Patentansprüche**

1. Eine Batteriezelle (100a), aufweisend:

   eine Elektrodenanordnung (110);
   ein Gehäuse (120) zum Aufnehmen der Elektrodenanordnung (110); und
   einen Bandwicklungsabschnitt (130, 230, 330), der eine Außenumfangsfläche der Elektrodenanordnung (110) umschließt, wobei der Bandwicklungsabschnitt (130, 230, 330) eine erste Klebeschicht (133, 233, 333), die auf der Elektrodenanordnung (110) positioniert ist, eine erste Basisschicht (132, 232, 332), die auf der ersten Klebeschicht (133, 233, 333) positioniert ist, und eine zweite Basisschicht (131, 231, 331), die auf der ersten Basisschicht (132, 232, 332) positioniert ist, aufweist, **dadurch gekennzeichnet, dass** die erste Basisschicht (132, 232, 332) eine Dehnung, die höher als die der zweiten Basisschicht (131, 231, 331) ist, aufweist, und die zweite Basisschicht (131, 231, 331) eine Zugfestigkeit, die höher als die der ersten Basisschicht (132, 232, 332) ist, aufweist.

2. Die Batteriezelle nach Anspruch 1, wobei die Dehnung höher als 139,5% ist.

3. Die Batteriezelle nach Anspruch 1 oder 2, wobei die Zugfestigkeit höher als 21246,4 N pro Quadratzentimeter ist.

4. Die Batteriezelle nach einem der Ansprüche 1 bis 3, wobei die erste Basisschicht (132, 232, 332) aus einem von Polypropylen (PP), Polyimid (PI) oder Polyparaphenylensulfid (PPS) hergestellt ist.

5. Die Batteriezelle nach einem der Ansprüche 1 bis 4, wobei die zweite Basisschicht (131, 231, 331) aus einem von Polyethylenterephthalat (PET), Polyimid (PI) oder Polyparaphenylensulfid (PPS) hergestellt ist.

6. Die Batteriezelle nach einem der vorhergehenden Ansprüche, wobei die Elektrodenanordnung (110) eine Kathodenplatte (113), einen Separator (112) und eine Anodenplatte (111), die aufeinanderfolgend gewickelt sind, aufweist, und wobei der Bandwicklungsabschnitt (130) eine Wicklungsendlinie, in der die Wicklungen enden, umschließt.

7. Die Batteriezelle nach einem der vorhergehenden Ansprüche, wobei die zweite Basisschicht (231, 331) Nutabschnitte (234, 334, 336) und Vorsprungsabschnitte (235, 335, 337), die auf der Außenumfangsfläche der zweiten Basisschicht (231, 331) ausgebildet sind, aufweist.

8. Die Batteriezelle nach Anspruch 7, wobei die zweite Basisschicht (331) erste Nutabschnitte (334) und erste Vorsprungsabschnitte (335) aufweist und die ersten Vorsprungsabschnitte (335) mit zweiten Nutabschnitten (336) und zweiten Vorsprungsabschnitten (337) auf der Außenumfangsfläche der zweiten Basisschicht (331) ausgebildet sind.

9. Die Batteriezelle nach einem der vorhergehenden Ansprüche, wobei das Gehäuse (120) eine rechteckige oder ovale Form aufweist.

10. Die Batteriezelle nach einem der vorhergehenden Ansprüche, wobei der Bandwicklungsabschnitt (330) eine zweite Klebeschicht (231), die zwischen der ersten Basisschicht (332) und der zweiten Basisschicht (331) ausgebildet ist, aufweist.

11. Die Batteriezelle nach den Ansprüchen 7 und 8, wobei die Vorsprungsabschnitte (235, 337) eine Innenfläche des Gehäuses (120) direkt kontaktieren.

**Revendications**

1. Élément de batterie (100a) comprenant :

un ensemble d'électrodes (110) ;
un boîtier (120) pour recevoir l'ensemble d'électrodes (110) ; et
une partie de rubanage (130, 230, 330) entourant une surface périphérique externe de l'ensemble d'électrodes (110), dan lequel la partie de rubanage (130, 230, 330) comporte une première couche adhésive (133, 233, 333) positionnée sur l'ensemble d'électrodes (110), une première couche de base (132, 232, 332) positionnée sur la première couche adhésive (133, 233, 333), et une deuxième couche de base (131, 231, 331) positionnée sur la première couche de base (132, 232, 332),
**caractérisé en ce que**
la première couche de base (132, 232, 332) a un allongement supérieur à celui de la deuxième couche de base (131, 231, 331) et la deuxième couche de base (131, 231, 331) a une résistance à la traction supérieure à celle de la première couche de base (132, 232, 332).

2. Élément de batterie de la revendication 1, dans lequel l'allongement est supérieur à 139,5%.

3. Élément de batterie de la revendication 1 ou 2, dans lequel la résistance à la traction est supérieure à 21246,4 N par centimètre carré.

4. Élément de batterie de l'une des revendications 1 à 3, dans lequel la première couche de base (132, 232, 332) est réalisée en un élément entre le polypropylène (PP), le polyimide (PI) et le sulfure de polyparaphénylène (PPS).

5. Élément de batterie de l'une des revendications 1 à 4, dans lequel la deuxième couche de base (131, 231, 331) est réalisée en un élément entre le polyéthylène téréphtalate (PET), le polyimide (PI) et le sulfure de polyparaphénylène (PPS).

6. Élément de batterie de l'une des revendications précédentes, dans lequel l'ensemble d'électrodes (110) a une plaque de cathode (113), un séparateur (112) et une plaque d'anode (111) enroulés successivement, et la partie de rubanage (130) entoure une ligne de fin d'enroulement dans laquelle les enroulements se terminent.

7. Élément de batterie de l'une des revendications précédentes, dans lequel la deuxième couche de base (231, 331) a des parties de rainure (234, 334, 336) et des parties de saillie (235, 335, 337) formées sur la surface périphérique externe de la deuxième couche de base (231, 331).

8. Élément de batterie de la revendication 7, dans lequel la deuxième couche de base (331) a des premières parties de rainure (334) et des premières parties de saillie (335) et les premières parties de saillie (335) sont formées avec des deuxièmes parties de rainure (336) et des deuxièmes parties de saillie (337) sur la surface périphérique externe de la deuxième couche de base (331).

9. Élément de batterie de l'une des revendications précédentes, dans lequel le boîtier (120) a une forme rectangulaire ou ovale.

10. Élément de batterie de l'une des revendications précédentes, dans lequel la partie de rubanage (330) comporte une deuxième couche adhésive (231) formée entre la première couche de base (332) et la deuxième couche de base (331).

11. Élément de batterie des revendications 7 et 8, dans lequel les parties de saillie (235, 337) sont en contact direct avec une surface interne du boîtier (120).

# FIG. 1

# FIG. 2

# FIG. 3

100a

# FIG. 4

130

FIG. 5

FIG. 6

# FIG. 7

# FIG. 8

**EP 2 672 542 B1**

## REFERENCES CITED IN THE DESCRIPTION

**Patent documents cited in the description**

- EP 1445806 A1
- KR 20000051639 A
- EP 1022798 A2
- EP 2273599 A1
- KR 20080035226 A
- EP 1447864 A1